# EUROPÄISCHE PATENTSCHRIFT

(11) **EP 2 776 158 B1**
(45) Veröffentlichungstag und Bekanntmachung des Hinweises auf die Patenterteilung: **26.04.2017**
(21) Anmeldenummer: 12848393.0
(22) Anmeldetag: 05.11.2012
(51) Int. Cl.: B01J 23/755, B01J 37/03

(54) **KATALYSATORZUSAMMENSETZUNG FÜR DIE METHANDAMPFREFORMIERUNG IN BRENNSTOFFZELLEN**
CATALYST COMPOSITION FOR STEAM REFORMING OF METHANE IN FUEL CELLS
COMPOSITION CATALYTIQUE POUR LE REFORMAGE DU MÉTHANE À LA VAPEUR DANS DES PILES À COMBUSTIBLE

(30) Priorität: 09.11.2011 EP 11188453
(43) Veröffentlichungstag der Anmeldung: 17.09.2014
(73) Patentinhaber: BASF SE, 67056 Ludwigshafen am Rhein (DE)
(72) Erfinder: MILANOV, Andrian, 68163 Mannheim (DE); SCHWAB, Ekkehard, 67434 Neustadt (DE); SCHÄFER, Alexander, 67117 Limburgerhof (DE)
(74) Vertreter: BASF IP Association
(86) Internationale Anmeldenummer: PCT/IB2012/056155
(87) Internationale Veröffentlichungsnummer: WO 2013/068904

(56) Entgegenhaltungen:
- EP-A1- 2 236 204
- WO-A1-2011/020194
- WO-A1-2013/068905
- CN-A- 101 402 041
- CN-A- 101 829 577
- US-A1- 2004 166 056

## Beschreibung

Die vorliegende Erfindung betrifft eine Katalysatorzusammensetzung und ein daraus hergestelltes Katalysatormaterial für die Methandampfreformierung in Brennstoffzellen, insbesondere in Schmelzcarbonatbrennstoffzellen. Die Erfindung betrifft weiterhin ein Verfahren zur Herstellung solcher Katalysatorzusammensetzungen.

Schmelzcarbonatbrennstoffzellen ("Molten Carbonate Fuel Cells MCFC") sind Hochtemperatur-Brennstoffzellen, in denen über elektrochemische Reaktionen zwischen Kathode und Anode und einer dazwischen liegenden Elektrolytmatrix Strom erzeugt wird. Als Elektrolyt verwendet man für diesen Zellentyp ein geschmolzenes Eutektikum einer Alkalicarbonat-Mischschmelze (z. B. aus Lithium- und Kaliumcarbonat), welche auf ein Trägermaterial (z.B. eine Trägermembran aus LiAlO₂/Al₂O₃) imprägniert ist.

Der für den Betrieb der Brennstoffzelle benötigte Wasserstoff kann durch Dampfreformierungsreaktion direkt in der Zelle erzeugt werden. Beispielhaft sei eine Dampfreformierungsreaktion von Methan genannt:

CH₄ + H₂O → CO + 3H₂ (1)

CO + H₂O → CO₂+ H₂ (2)

Die erste Reaktion ist stark endotherm und kann die freiwerdende Wärme aus der elektrochemischen Reaktion direkt verbrauchen. Diese Reaktion ist eine katalytische Reaktion, die einen Reformierungskatalysator (z. B. einen Ni-Katalysator) benötigt,
wobei es möglich ist, Erdgas (gegebenenfalls auch Methan, Petroleumgas, Naphtha, Schweröl oder Rohöl) als Ausgangsstoff für den Betrieb der Brennstoffzelle zu nutzen.

Weitere Informationen zur Methandampfreformierung sind in zahlreichen Literaturstellen enthalten (siehe z. B. "Catalytic Steam Reforming" in "Catalysis" Science and Technology, Vol. 5, Springer Verlag, Berlin, 1985 oder "Catalysis" Vol. 3, Specialist Periodical Reports, London 1980, The Chemical Society). Kommerzielle Nickelkatalysatoren für die Methandampfreformierung sind beispielsweise in Catalysis Science and Technology, J.R. Andersen and M. Boudart, Vol. 5, Springer-Verlag, Berlin 1984 beschrieben.

Weitere Nickel-haltige Reformierungskatalysatoren sind Gegenstand der folgenden Patentanmeldungen:
In WO 2011/020194 A1 wird ein Katalysator zur Dampfreformierung von Methan beschrieben, der ein NiAl₂O₄-Spinel enthält, das auf einen Träger aus Al₂O₃ und Yttrium stabilisiertem ZrO₂ (YSZ) imprägniert wurde.

WO 2013/068905 A1 offenbart die Herstellung von Katalysatoren zur Dampfreformierung von Methan enthaltend Nickel-Magnesium Mischoxid, Magnesium Spinel und gegebenenfalls Aluminiumoxidhydroxid.

In EP 2236204 A1 wird ein Katalysator zur Reformierung von Teer-haltigen Gasen beschrieben, wobei der Katalysator NiO, MgO und Al₂O₃ enthält.

US 2004/166056 beschreibt einen Katalysator zur Reformierung von Methan in Brennstoffzellen enthaltend Ni-V₂O₅-ZrO₂ auf einen Al₂O₃ Träger.

In CN 101829577 A wird ein Katalysator, enthaltend CaO, NiO, ZrO₂ und Al₂O₃ zur Dampfreformierung von Methan offenbart.

Gewöhnlich wird heute ein Teil der Reformierung in einem Prereformer durchgeführt. Dies ist vorteilhaft, da am Eintritt in die Zelle schon Wasserstoff zur Verfügung stehen sollte. Ein weiterer Teil der Reformierung soll aber in der Zelle stattfinden. Der Prozess ist auch als direkte interne Reformierung (Engl. "direct internal reforming - DIR") bekannt. Dabei ist es vorteilhaft, wenn die endotherme Reformierung möglichst in direkter Nachbarschaft zur elektrochemischen Reaktion stattfindet, zum einen wegen des begünstigten Wärmeaustausches, zum anderen wegen der Verschiebung des chemischen Gleichgewichts.

Während des Betriebs von Schmelzcarbonatbrennstoffzellen bei Temperaturen im Bereich zwischen 580°C und 675°C ist ein Verdampfen eines Teils des Elektrolyten in Form von Alkaliverbindungen wie z. B. KOH, NaOH oder LiOH zu beobachten. Diese Alkalimetallionen können sich an den eingangs genannten Reformierungskatalysatoren abscheiden und diese durch eine unerwünschte Vergiftung deaktivieren.

Als Lösung des Problems schlägt die DE 10165033 A1 den Einsatz eines Kalium-Adsorptionsmaterials auf einem Träger (z. B. Papier) zwischen Anode und Katalysator vor. Dabei kann es einerseits schnell zu einer Sättigung des Adsorptionsmaterials kommen, andererseits wird die Kaliummenge irreversibel dem Elektrolyt entzogen und es erfolgt eine Verschiebung des Gleichgewichts in Richtung KOH-Neubildung. Darüber hinaus kann eine effektive K-Adsorption nur bei sehr feinporiger Schicht gewährleistet werden, die einen hohen Druckverlust beziehungsweise einen geringen Gasaustausch zwischen der Schicht mit Katalysator und der porösen Stromkollektorschicht aufweist.

In DE 102007009556 A1 wird zur Lösung des Problems ein Katalysator zur Methandampfreformierung mit hohem Porenvolumen von mindestens 200 mm³/g vorgeschlagen. Diese Katalysatoren weisen zwar eine geringere Empfindlichkeit gegenüber Kaliumionen auf, das Deaktivierungsverhalten dieses Katalysatortyps ist aber weiterhin nicht zufriedenstellend.

Aufgabe der vorliegenden Erfindung ist es somit, ein System für die direkte interne Reformierung in einer MCFC bereitzustellen, mit dem die Katalysatorvergiftung durch Alkalimetalle (z.B. Kalium- und/oder Lithiumionen) wirksam verhindert und die oben genannten Probleme beseitigt werden können. Dafür soll ein Katalysator bereitgestellt werden, der eine geringere Desaktivierungsrate und gleichzeitig eine größere Stabilität gegen Alkalimetallionen aufweist.

Diese Aufgabe wurde gelöst durch eine Katalysatorzusammensetzung für die Methandampfreformierung, insbesondere für die direkte interne Reformierung in einer Schmelzcarbonatbrennstoffzellen, enthaltend als Komponente a) Mischoxide von Nickel, Aluminium und Zirkonium und als Komponente b) eine weitere Sauerstoff-haltige Aluminiumverbindung, ausgewählt aus der Gruppe, bestehend aus Aluminiumhydroxid [Al(OH)₃], Aluminiumoxidhydroxid [AIO(OH)] und Aluminiumoxid (Al₂O₃), dadurch gekennzeichnet, dass es sich bei der Katalysatorzusammensetzung um eine physikalische Mischung der Komponenten a) und b) handelt.

Unter dem Begriff "physikalische Mischung" in Zusammenhang mit der erfindungsgemäßen Katalysatorzusammensetzung ist ein heterogenes Gemisch zu verstehen, in dem die Komponenten a) und b) in klar abgegrenzten Phasen vorliegen und somit ein mehrphasiges System bilden.

Für eine solche physikalische Mischung werden die Komponenten a) und b), bevorzugt als pulverförmige Partikel zusammengegeben und innig vermischt, wie nachstehend beschrieben. Das Vermischen kann in jedem bekannten Mischer erfolgen, beispielweise in einem Rhönradmischer, Pulvermischer, Taumelmischer oder in anderen für den Zweck geeigneten Mischern.

Die katalytisch aktive Phase der erfindungsgemäßen Katalysatorzusammensetzung (Komponente a) enthält Nickel, Aluminium und Zirkonium, ist aber auf diese Elemente/Mischung nicht beschränkt. Bevorzugt sind die im Stand der Technik bereits bekannten, hochaktiven Nickelhaltigen Katalysatoren, insbesondere gefällte Pre-Reformierungs-, Reformierungs- und Hydrierkatalysatoren. Als Beispiele hierfür sind Pre-Reformierungs- und Reformierungskatalysatoren der Firma BASF SE zu nennen, u.a. der Katalysator G1-85, enthaltend 60 bis 75 Gew.-% NiO und zusätzlich Al₂O₃ und ZrO₂.

Die Komponente b) kann Aluminiumhydroxid [Al(OH)₃], Aluminiumoxidhydroxid [AIO(OH)] oder Aluminiumoxid (Al₂O₃) oder Mischungen davon enthalten. Unter Aluminiumhydroxid sind Gibbsit [γ-Al(OH)₃], Bayerit [α-Al(OH)₃] oder amorphe Hydroxide aus Sol-Gel-Prozessen zu verstehen. Im Falle von Aluminiumoxidhydroxid wird bevorzugt Böhmit [γ-AlO(OH)] eingesetzt. In einer bevorzugten Ausführungsform werden als Komponente b) Aluminiumoxid Phasen mit hoher Oberfläche, beispielsweise chi-Aluminiumoxid (χ-Al₂O₃), eta-Aluminiumoxid (η-Al₂O₃), rho-Aluminiumoxid (ρ-Al₂O₃), kappa-Aluminiumoxid (κ-Al₂O₃), gamma-Aluminiumoxid (γ-Al₂O₃), delta-Aluminiumoxid (δ-Al₂O₃), oder theta (θ-Al₂O₃) eingesetzt. Besonders bevorzugt besteht die Aluminiumoxid Phase aus γ-Al₂O₃, δ-Al₂O₃, oder θ-Al₂O₃, bzw. aus einer Mischung aus diesen drei Phasen. Die Bestimmung der Phasenzusammensetzung der Komponente b) kann beispielsweise durch Röntgenbeugung erfolgen.

Eine bevorzugte Ausführungsform der erfindungsgemäßen Katalysatorzusammensetzung enthält als Komponente a) Mischoxide von Nickel, Aluminium und Zirkonium und als Komponente b) gamma Aluminiumoxid (γ-Al₂O₃), delta Aluminiumoxid (δ-Al₂O₃) oder theta Aluminiumoxid (θ-Al₂O₃) oder Mischungen davon.

Die Menge an Komponente b) in der Katalysatorzusammensetzung liegt im Bereich von 1 bis 60 Gew.-%, bevorzugt im Bereich von 5 bis 50 Gew.-%, und besonders bevorzugt im Bereich von 10 bis 30 Gew.-%, bezogen auf das Gesamtgewicht der Katalysatorzusammensetzung.

Die erfindungsgemäße Katalysatorzusammensetzung ist ferner dadurch gekennzeichnet, dass die Partikel der Komponente a) eine Partikelgröße mit einem d₅₀-Wert von 0,5 bis 1500 µm, bevorzugt 1 bis 1000 µm, besonders bevorzugt 1 bis 500 µm, ganz besonders bevorzugt 50 bis 300 µm und die Partikel der Komponente b) eine Partikelgröße mit einem d₅₀-Wert von 0,3 bis 500 µm, bevorzugt 0,5 bis 250 µm, besonders bevorzugt 1 bis 200 µm, ganz besonders bevorzugt 10 bis 150 µm aufweisen.

Der d₅₀-Wert bedeutet, dass 50% der Partikel diesen Wert (Partikeldurchmesser) besitzen. Die Bestimmung der Partikelgröße und der Partikelgrößenverteilung des Katalysators erfolgt dabei durch Laserstreuung mit einem Malvern Mastersizer 2000 mit einem Messbereich von 0,02-2000 µm. Die Auswertung erfolgt nach der Fraunhofer-Methode.

Die erfindungsgemäße Katalysatorzusammensetzung ist außerdem dadurch gekennzeichnet, dass die BET-Oberfläche der Komponente a) im Bereich von 20 bis 300 m²/g, bevorzugt im Bereich von 30 bis 250 m²/g, besonders bevorzugt im Bereich von 50 bis 200 m²/g liegt und die Komponente b) eine BET-Oberfläche im Bereich von 20 bis 400 m²/g, bevorzugt im Bereich von 30 bis 300 m²/g, besonders bevorzugt im Bereich von 50 bis 200 m²/g aufweist.

Die Bestimmung der BET-Oberfläche wird nach der DIN 66131 durchgeführt. Die Auswertung erfolgt nach der Mehrpunktmethode mit 5 Messpunkten. Die Trocknung unmittelbar vor der Messung erfolgt bei 200°C. Es wird der Druckbereich p/p₀ = 0,065-0,208 gemessen.

Gegenstand der Erfindung ist auch ein Katalysatormaterial, umfassend eine zu Tabletten oder Extrudaten verarbeitete Katalysatorzusammensetzung, enthaltend als Komponente a) Mischoxide von Nickel, Aluminium und Zirkonium und als Komponente b) eine weitere Sauerstoff-haltige Aluminiumverbindung, ausgewählt aus der Gruppe, bestehend aus Aluminiumhydroxid [Al(OH)₃], Aluminiumoxidhydroxid [AIO(OH)] und Aluminiumoxid (Al₂O₃), dadurch gekennzeichnet, dass es sich bei der Katalysatorzusammensetzung um eine physikalische Mischung der Komponenten a) und b) handelt.

Eine bevorzugte Ausführungsform des erfindungsgemäßen Katalysatormaterials liegt in Tablettenform vor, das, abgesehen von Binde-, Gleit- und anderen Verarbeitungshilfsmittel, im wesentlichen Mischoxiden von Nickel, Aluminium und Zirkonium als Komponente a) und gamma Aluminiumoxid (γ-Al₂O₃), delta Aluminiumoxid (δ-Al₂O₃) oder theta Aluminiumoxid (θ-Al₂O₃) oder Mischungen davon als Komponente b) enthält.

Für den Einsatz in einer Schmelzcarbonatbrennstoffzelle werden Tabletten eingesetzt, die einen Durchmesser im Bereich von 0,8 bis 5 mm, bevorzugt im Bereich von 1 bis 3 mm, besonders bevorzugt im Bereich von 1,5 bis 2,5 mm aufweisen und deren Höhe im Bereich von 1 bis 10 mm, bevorzugt im Bereich von 1 bis 5 mm, besonders bevorzugt im Bereich von 1,5 bis 4 mm liegt.

Bezüglich weiterer bevorzugter Ausführungsformen des erfindungsgemäßen Katalysatormaterials, insbesondere in Bezug auf die Komponenten a) und b) sei auf die bereits erfolgten Ausführungen zur erfindungsgemäßen Katalysatorzusammensetzung hingewiesen.

Gegenstand der Erfindung ist auch ein Verfahren zur Herstellung der eingangs definierten Katalysatorzusammensetzung, umfassend die folgenden Verfahrensschritte in der genannten Reihenfolge:
a) Herstellen einer Lösung oder Dispersion der Komponente a) und/oder von löslichen Ausgangsverbindungen davon;
b) Fällung eines Festkörpers aus dieser Lösung oder Dispersion durch Zugabe einer Base;
c) Abtrennung und Trocknung des Festkörpers;
d) wahlweise eine Kalzination des Festkörpers;
e) wahlweise eine Kompaktierung des Festkörpers;
f) Vermahlung des Festkörpers auf eine einheitliche Partikelgröße und
g) homogene Durchmischung des Festkörpers mit der Komponente b).

Im ersten Verfahrensschritt, Schritt a), wird in üblicher Weise eine Lösung oder Dispersion der Komponente a) hergestellt, beispielsweise durch Lösen oder Dispergieren in einer Säure wie Salpetersäure. Wahlweise werden statt der Komponente a) auch deren Ausgangsverbindungen verwendet, beispielsweise die Nitrate, Carbonate, Hydroxicarbonate der Metalle in einer wässrigen Lösung, die auch sauer, beispielsweise salpetersauer sein kann, gelöst. Das Mengenverhältnis der Salze in der Lösung oder Dispersion wird gemäß der gewünschten Endzusammensetzung der Katalysatorzusammensetzung stöchiometrisch berechnet und eingestellt.

Aus dieser Lösung oder Dispersion wird im Schritt b) ein Festkörper als Vorläufer der Katalysatorzusammensetzung gefällt. Dies erfolgt in üblicher Weise, vorzugsweise durch Erhöhung des pH-Werts der Lösung oder Dispersion durch Zugabe einer Base, etwa durch Zugabe von Natronlauge oder Sodalösung.

Das entstehende feste Fällprodukt wird vor der Trocknung in Schritt c) in der Regel von der überstehenden Lösung abgetrennt, etwa durch Filtrieren oder Dekantieren, und mit Wasser frei von löslichen Bestandteilen wie Natriumnitrat gewaschen. Das Fällprodukt wird dann normalerweise vor der Weiterverarbeitung mit üblichen Trocknungsmethoden getrocknet. Im Allgemeinen genügt dazu eine Behandlung bei leicht erhöhter Temperatur, etwa mindestens 80°C, vorzugsweise mindestens 100°C und in besonders bevorzugter Weise mindestens 120°C statt, über einen Zeitraum von 10 min bis 12 Stunden, vorzugsweise 20 min bis 6 Stunden und in besonders bevorzugter Weise 30 min bis 2 Stunden. Es ist auch möglich und besonders bequem, das Produkt der Fällung direkt oder nach Waschen durch Sprühtrocknung zu einem trockenen weiterverarbeitungsfähigen Pulver umzuwandeln.

Im Anschluss an die Trocknung kann das gefällte und getrocknete Vorprodukt der Katalysatorzusammensetzung wahlweise einem Kalzinationsschritt d) unterzogen werden. Die angewendete Kalzinationstemperatur liegt dabei im Allgemeinen bei mindestens 250°C, vorzugsweise mindestens 300°C und in besonders bevorzugter Weise bei mindestens 350°C, sowie im Allgemeinen bei höchstens 500°C, vorzugsweise höchstens 450°C und in besonders bevorzugter Weise bei höchstens 410°C. Die Kalzinationsdauer beträgt im Allgemeinen mindestens 10 Minuten, vorzugsweise mindestens 20 Minuten und in besonders bevorzugter Weise mindestens 30 Minuten sowie im Allgemeinen höchstens 12 Stunden, vorzugsweise höchstens 6 Stunden und in besonders bevorzugter Weise höchstens 4 Stunden. Der Trocknungsschritt c) und der Kalzinationsschritt d) können dabei direkt ineinander übergehen.

Nach dem Trocknungsschritt c) oder dem Kalzinationsschritt d) kann das Vorprodukt der Katalysatorzusammensetzung einem Kompaktierungsschritt e) unterzogen werden. Dies kann beispielsweise in einem Walzenkompaktor erfolgen.

Die Komponente a) der Katalysatorzusammensetzung wird im Zuge ihrer Herstellung mindestens einem der beiden Verfahrensschritte d) oder e) unterzogen, wahlweise auch beiden. Bei dem Kalzinationsschritt wird unter Anderem wie üblich auch die BET-Oberfläche und das Porenvolumen eingestellt, wobei bekanntermaßen die BET-Oberfläche und das Porenvolumen mit steigender Kalzinationsdauer und Kalzinationstemperatur sinken.

Vorzugsweise wird zumindest insgesamt so lange kalziniert, dass der Gehalt an Carbonat (berechnet als CO₃²⁻) höchstens 10 Gew.-%, bezogen auf das Gesamtgewicht des Kalzinationsprodukts beträgt, und ihre BET-Oberfläche einen Wert im Bereich von mindestens 20 und höchstens 300 m²/g aufweist.

Das Vermahlen des Festkörpers der Komponente a) im Verfahrensschritt f) kann in jeder bekannten Mühle, beispielsweise einer Schlagmühle erfolgen und das Abtrennen der Partikel mit der gewünschten Partikelgröße kann durch einen Zyklon erfolgen. Auch andere Methoden zum Abtrennen der entsprechend großen Katalysatorpartikel sind denkbar, beispielsweise Zentrifugieren oder Sedimentieren.

Bei der Vermahlung wird der Festkörper von Komponente a) auf eine einheitliche Partikelgröße gemahlen, wobei diese im Allgemeinen einen d₅₀-Wert von 0,5 bis 1500 µm, bevorzugt 1 bis 1000 µm, besonders bevorzugt 1 bis 500 µm, ganz besonders bevorzugt 50 bis 300 µm besitzt.

Im letzten Schritt zur Herstellung der erfindungsgemäßen Katalysatorzusammensetzung werden die Komponenten a) und b) zusammengegeben und innig vermischt. Das Vermischen kann dabei in jedem bekannten Mischer erfolgen, beispielweise in einem Rhönradmischer, Pulvermischer, Taumelmischer oder anderen für den Zweck geeigneten Mischern.

Zu dem Gemisch können auch weitere Zusatzstoffe wie Binde-, Gleit- und andere Verarbeitungshilfsmittel zugesetzt werden, dessen Zugabe vor, nach oder gleichzeitig mit den Komponenten a) und b) erfolgen kann. Schmiermittel, beispielweise Graphit, Stearinsäure, Magnesiumstearat oder andere im Stand der Technik bekannte Schmiermittel, dienen dazu die Konfektionierung der erfindungsgemäßen Katalysatorzusammensetzung in einer geeigneten Form zu unterstützen.

Gegenstand der Erfindung ist ferner ein Verfahren zur Herstellung des eingangs definierten Katalysatormaterials durch Tablettieren oder Extrudieren eines Pulvers oder eines Granulats der bereits eingangs ausführlich beschriebenen Katalysatorzusammensetzung, wobei u.a. folgende Schritte denkbar sind:
- Vorkompaktieren und Tablettieren des vorbehandelten Pulvers zu Tabletten,
- Anmaischen, Kneten/Kollern und Extrudieren zu strangförmigen Extrudaten,

Eine bevorzugte Ausführungsform des Verfahrens ist die Tablettierung des vorbehandelten Pulvers zu Tabletten in Exzenter- oder Rundlaufpressen.

Das Katalysatormaterial und die Katalysatorzusammensetzung eignen sich besonders zur Verwendung als Reformierungskatalysator in einer Brennstoffzelle, insbesondere für die direkte interne Reformierung von Methan in Schmelzcarbonatbrennstoffzellen.

Im Folgenden wird die vorliegende Erfindung anhand von Beispielen näher erläutert.

### Beispiel 1 (Herstellung des erfindungsgemäßen Katalysatormaterials)

420g eines kalzinierten Pulvers enthaltend eine homogene Mischung der Oxide von Nickel, Aluminium und Zirkonium (BET-Oberfläche = 160 m²/g; NiO = 72 Gew.-%, Al₂O₃ = 19 Gew.-%, ZrO₂ = 9 Gew.-%, d₅₀ = 137 µm) wurden als reformierungsaktive Phase (Komponente a) eingesetzt. Als Komponente b) wurden dazu 180g eines Aluminiumoxid Pulvers bestehend aus γ-Al₂O₃, δ-Al₂O₃ und θ-Al₂O₃ (BET = 126 m²/g, d₅₀ = 116 µm; Firma Sasol Germany GmbH) zugegeben. Anschließend wurde das Pulvergemisch mit 3 Gew.-% Graphit versetzt und mittels eines Rhönradmischers (Firma J. Engelsmann AG) innig vermischt. Die so erhaltene Mischung wurde auf einem Kompaktor kompaktiert und anschließend auf einer hydraulischen Exzenterpresse (Kilian SP300, Kilian & Co GmbH) zu Volltabletten (Durchmesser = 2,5 mm; Höhe = 2,5 mm) verarbeitet (Bruttozusammensetzung des Katalysators bezogen auf Oxide: 50,4 Gew.-% NiO, 43,65 Gew.-% Al₂O₃, 5,95 Gew.-% ZrO₂).

### Vergleichsbeispiel

Für die Herstellung des Vergleichsbeispielkatalysators wurden 500g von dem gleichen kalzinierten Pulver enthaltend die Oxide von Nickel, Aluminium und Zirkonium (BET-Oberfläche = 160 m²/g; NiO = 72 Gew.-%, Al₂O₃ = 19 Gew.%, ZrO₂ = 9 Gew.%) eingesetzt. Das Pulver wurde mit 3 Gew.-% Graphit versetzt und mittels eines Rhönradmischers (Firma J. Engelsmann AG) innig vermischt. Die so erhaltene Mischung wurde auf einem Kompaktor kompaktiert und anschließend auf einer hydraulischen Exzenterpresse (Kilian SP300, Kilian & Co GmbH) zu Volltabletten (Durchmesser = 2,5 mm; Höhe = 2,5 mm) verarbeitet.

### Katalysatortests

Für die Testung der Reformieraktivität der Katalysatoren wurde ein vertikaler Reaktor mit einer isothermen Heizzone von ca. 50 cm verwendet. Der zu testende Katalysator wurde auf einer Seite des Reaktors in der isothermen Zone eingebaut, auf 600°C unter Stickstoff erhitzt und anschließend 15h (über Nacht) mit Wasserstoff reduziert. Danach wurde die Reaktortemperatur auf 700°C erhöht und 2.5h mit der folgenden Gasmischung (Vol.-%) 18% CH₄, 7% H₂, 2% CO₂, 73% H₂O, bei einer Raumgeschwindigkeit von 60000h⁻¹ reformiert. Der so bestimmte Methanumsatzwert wurde als Ausgangspunkt bei der Untersuchung des Desaktivierungsverhalten des Katalysators durch Alkalimetallhydroxiddämpfe verwendet.

Für diese Untersuchung wurde der Reaktor auf Raumtemperatur abgekühlt und unter Inertgas (N₂) von der dem Katalysator gegenüberliegende Seite mit LiAlO₂/αAl₂O₃ Tabletten (20x5mm) beladen, welche mit einer Mischung aus Li₂CO₃ und K₂CO₃ (Molarverhältnis 62:38; 25 Gew.-% Li/K-CO₃) imprägniert wurden. Anschließend wurde der Reaktor aufgeheizt und der Desaktivierungstest begonnen. Der Methanumsatz wurde in regelmäßigen Abständen während des gesamten Testdauer (∼1400h) gemessen.

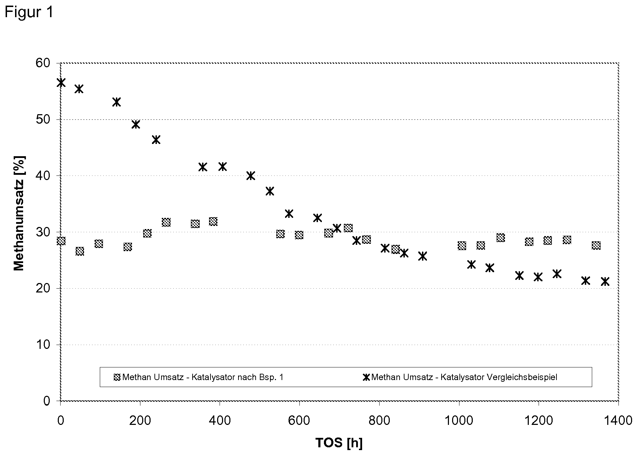

Die Ergebnisse der Aktivitätsmessungen sind in Abbildung 1 dargestellt. Es ist eindeutig zu erkennen, dass der erfindungsgemäße Katalysator eine sehr stabile Methanumsatzaktivität aufweist, welcher über der gesamten Testdauer nahezu unverändert bleibt. Im Gegensatz dazu zeigt der Vergleichskatalysator zwar ein hohes Methanumsatz-Anfangsniveau, welche aber unter den Einfluss von Alkalimetallhydroxid- bzw. Alkalimetallcarbonat Dämpfe ständig abnimmt und nach ca. 800h unter dem Methanumsatz von dem erfindungsgemäßen Katalysator liegt.

## Patentansprüche

1. Katalysatorzusammensetzung für die Methandampfreformierung, enthaltend als Komponente a) Mischoxide von Nickel, Aluminium und Zirkonium und als Komponente b) eine weitere Sauerstoff-haltige Aluminiumverbindung, ausgewählt aus der Gruppe, bestehend aus Aluminiumhydroxid [Al(OH)₃], Aluminiumoxidhydroxid [AIO(OH)] und Aluminiumoxid (Al₂O₃), **dadurch gekennzeichnet, dass** es sich bei der Katalysatorzusammensetzung um eine physikalische Mischung der Komponenten a) und b) handelt.

2. Katalysatorzusammensetzung nach Anspruch 1, **dadurch gekennzeichnet, dass** sie als Komponente b) gamma Aluminiumoxid (γ-Al₂O₃), delta Aluminiumoxid (δ-Al₂O₃) oder theta Aluminiumoxid (θ-Al₂O₃) oder Mischungen davon enthält.

3. Katalysatorzusammensetzung nach einem der Ansprüche 1 oder 2, **dadurch gekennzeichnet, dass** die Komponente b) in einer Menge von 1 bis 60 Gew.-%, bezogen auf die Gesamtmenge der Katalysatorzusammensetzung, vorliegt.

4. Katalysatorzusammensetzung nach einem der Ansprüche 1 bis 3, **dadurch gekennzeichnet, dass** die Komponenten a) und b) als pulverförmige Partikel vorliegen.

5. Katalysatorzusammensetzung nach Anspruch 4, **dadurch gekennzeichnet, dass** die Partikel der Komponente a) eine Partikelgröße mit einem d₅₀-Wert von 0,5 bis 1500 µm und die Partikel der Komponente b) eine Partikelgröße mit einem d₅₀-Wert von 0,3 bis 500 µm aufweisen.

6. Katalysatorzusammensetzung nach Anspruch 4, **dadurch gekennzeichnet, dass** die BET-Oberfläche der Komponente a) im Bereich von 20 bis 300 m²/g und die BET-Oberfläche der Komponente b) im Bereich von 20 bis 400 m²/g liegt.

7. Katalysatormaterial, umfassend eine zu Tabletten oder Extrudaten verarbeitete Katalysatorzusammensetzung definiert gemäß einem der Ansprüche 1 bis 6.

8. Katalysatormaterial nach Anspruch 7 in Tablettenform, das, abgesehen von Binde-, Gleit- und anderen Verarbeitungshilfsmittel, im wesentlichen aus a) Mischoxiden von Nickel, Aluminium und Zirkonium und b) gamma Aluminiumoxid (γ-Al₂O₃), delta Aluminiumoxid (δ-Al₂O₃) oder theta Aluminiumoxid (θ-Al₂O₃) oder Mischungen davon aufgebaut ist.

9. Katalysatortabletten nach Anspruch 8 mit einem Durchmesser im Bereich von 0,8 bis 5 mm und einer Höhe im Bereich von 1 bis 10 mm.

10. Verfahren zur Herstellung der in den Ansprüchen 1 bis 6 definierten Katalysatorzusammensetzung, umfassend die folgenden Verfahrensschritte in der genannten Reihenfolge:
a) Herstellen einer Lösung oder Dispersion der Komponente a) und/oder von löslichen Ausgangsverbindungen davon;
b) Fällung eines Festkörpers aus dieser Lösung oder Dispersion durch Zugabe einer Base;
c) Abtrennung und Trocknung des Festkörpers;
d) wahlweise eine Kalzination des Festkörpers;
e) wahlweise eine Kompaktierung des Festkörpers;
f) Vermahlung des Festkörpers auf eine einheitliche Partikelgröße und
g) homogene Durchmischung des Festkörpers mit der Komponente b).

11. Verfahren zur Herstellung des in den Ansprüchen 7 bis 9 definierten Katalysatormaterials durch Tablettieren oder Extrudieren eines Pulvers oder eines Granulats der entsprechenden Katalysatorzusammensetzung.

12. Verfahren nach Anspruch 11, **dadurch gekennzeichnet, dass** zur Herstellung der Tabletten Exzenter- oder Rundlaufpressen eingesetzt werden.

13. Verwendung eines Katalysatormaterials definiert gemäß einem der Ansprüche 7 bis 9 als Reformierungskatalysator in einer Brennstoffzelle.

## Claims

1. A catalyst composition for the steam reforming of methane which comprises as component a) mixed oxides of nickel, aluminum and zirconium and as component b) a further oxygen-comprising aluminum compound selected from the group consisting of aluminum hydroxide [Al(OH)₃], aluminum oxide hydroxide [AlO(OH)] and aluminum oxide (Al₂O₃), wherein the catalyst composition is a physical mixture of the components a) and b).

2. The catalyst composition according to claim 1 comprising gamma-aluminum oxide (γ-Al₂O₃), delta-aluminum oxide (δ-Al₂O₃) or theta-aluminum oxide (θ-Al₂O₃) or mixtures thereof as component b).

3. The catalyst composition according to either of claims 1 and 2, wherein the component b) is present in an amount of from 1 to 60% by weight, based on the total amount of the catalyst composition.

4. The catalyst composition according to any of claims 1 to 3, wherein the components a) and b) are present as pulverulent particles.

5. The catalyst composition according to claim 4, wherein the particles of the component a) have a particle size having a d₅₀ of from 0.5 to 1500 µm and the particle of the component b) have a particle size having a d₅₀ of from 0.3 to 500 µm.

6. The catalyst composition according to claim 4, wherein the BET surface area of the component a) is in the range from 20 to 300 m²/g and the BET surface area of the component b) is in the range from 20 to 400 m²/g.

7. A catalyst material comprising a catalyst composition defined according to any of claims 1 to 6 which has been processed to form pellets or extrudates.

8. The catalyst material according to claim 7 in pellet form which is, apart from binders, lubricants and other processing aids, made up essentially of a) mixed oxides of nickel, aluminum and zirconium and b) gamma-aluminum oxide (γ-Al₂O₃), delta-aluminum oxide (δ-Al₂O₃) or theta-aluminum oxide (θ-Al₂O₃) or mixtures thereof.

9. A catalyst pellet according to claim 8 having a diameter in the range from 0.8 to 5 mm and a height in the range from 1 to 10 mm.

10. A process for producing the catalyst composition defined in any of claims 1 to 6, which comprises the following process steps in the order indicated:
a) production of a solution or dispersion of the component a) and/or soluble starting compounds for this;
b) precipitation of a solid from this solution or dispersion by addition of a base;
c) isolation and drying of the solid;
d) optionally calcination of the solid;
e) optionally compaction of the solid;
f) milling of the solid to a uniform particle size and
g) homogeneous mixing of the solid with the component b).

11. A process for producing the catalyst material defined in any of claims 7 to 9 by tableting or extrusion of a powder or of granules of the corresponding catalyst composition.

12. The process according to claim 11, wherein eccentric or rotary presses are used for producing the pellets.

13. The use of a catalyst material defined according to any of claims 7 to 9 as reforming catalyst in a fuel cell.

## Revendications

1. Composition catalytique pour le reformage à la vapeur de méthane, contenant en tant que composant a) des oxydes mixtes de nickel, d'aluminium et de zirconium et en tant que composant b) un autre composé d'aluminium contenant de l'oxygène, choisi dans le groupe constitué par l'hydroxyde d'aluminium [Al(OH)₃], l'oxyhydroxyde d'aluminium [AlO(OH)] et l'oxyde d'aluminium (Al₂O₃), **caractérisée en ce que** la composition catalytique est un mélange physique des composants a) et b).

2. Composition catalytique selon la revendication 1, **caractérisée en ce qu'**elle contient en tant que composant b) de l'oxyde d'aluminium gamma (γ-Al₂O₃), de l'oxyde d'aluminium delta (δ-Al₂O₃) ou de l'oxyde d'aluminium thêta (Θ-Al₂O₃) ou des mélanges de ceux-ci.

3. Composition catalytique selon l'une quelconque des revendications 1 ou 2, **caractérisée en ce que** le composant b) est présent en une quantité de 1 à 60 % en poids, par rapport à la quantité totale de la composition catalytique.

4. Composition catalytique selon l'une quelconque des revendications 1 à 3, **caractérisée en ce que** les composants a) et b) se présentent sous la forme de particules en poudre.

5. Composition catalytique selon la revendication 4, **caractérisée en ce que** les particules du composant a) présentent une taille de particule ayant une valeur d₅₀ de 0,5 à 1 500 µm et les particules du composant b) une taille de particule ayant une valeur d₅₀ de 0,3 à 500 µm.

6. Composition catalytique selon la revendication 4, **caractérisée en ce que** la surface BET du composant a) se situe dans la plage allant de 20 à 300 m²/g et la surface BET du composant b) dans la plage allant de 20 à 400 m²/g.

7. Matériau catalytique, comprenant une composition catalytique définie selon l'une quelconque des revendications 1 à 6 usinée en tablettes ou extrudats.

8. Matériau catalytique selon la revendication 7 sous la forme de tablettes qui, à l'exception des liants, des lubrifiants et des autres adjuvants d'usinage, est essentiellement constitué de a) des oxydes mixtes de nickel, d'aluminium et de zirconium et b) de l'oxyde d'aluminium gamma (γ-Al₂O₃), de l'oxyde d'aluminium delta (δ-Al₂O₃) ou de l'oxyde d'aluminium thêta (Θ-Al₂O₃) ou des mélanges de ceux-ci.

9. Tablettes de catalyseur selon la revendication 8, ayant un diamètre dans la plage allant de 0,8 à 5 mm et une hauteur dans la plage allant de 1 à 10 mm.

10. Procédé de fabrication de la composition catalytique définie dans les revendications 1 à 6, comprenant les étapes de procédé suivantes dans l'ordre indiqué :
a) la fabrication d'une solution ou d'une dispersion du composant a) et/ou de composés de départ solubles de celui-ci ;
b) la précipitation d'un solide à partir de cette solution ou dispersion par ajout d'une base ;
c) la séparation et le séchage du solide ;
d) éventuellement une calcination du solide ;
e) éventuellement un compactage du solide ;
f) le broyage du solide à une taille de particule uniforme et
g) le mélange homogène du solide avec le composant b).

11. Procédé de fabrication du matériau catalytique défini dans les revendications 7 à 9 par pastillage ou extrusion d'une poudre ou d'un granulat de la composition catalytique correspondante.

12. Procédé selon la revendication 11, **caractérisé en ce que** des presses excentriques ou rotatives sont utilisées pour la fabrication des tablettes.

13. Utilisation d'un matériau catalytique défini selon l'une quelconque des revendications 7 à 9 en tant que catalyseur de reformage dans une pile à combustible.
